# EUROPÄISCHE PATENTSCHRIFT

(11) **EP 1 916 587 B1**
(45) Veröffentlichungstag und Bekanntmachung des Hinweises auf die Patenterteilung: **29.02.2012**
(21) Anmeldenummer: 07020195.9
(22) Anmeldetag: 16.10.2007
(51) Int. Cl.: G05G 1/08, F16D 41/10

(54) **Kurbel für eine Welle**
Crank for a shaft
Manivelle pour un arbre

(30) Priorität: 27.10.2006 DE 202006016658 U
(43) Veröffentlichungstag der Anmeldung: 30.04.2008
(73) Patentinhaber: Werner, Paul, 87764 Legau (DE)
(72) Erfinder: Werner, Paul, 87764 Legau (DE)
(74) Vertreter: Schulz, Manfred

(56) Entgegenhaltungen:
- EP-A- 0 751 032
- DE-C- 371 716
- DE-U1- 8 508 312
- US-A- 1 572 635

## Beschreibung

Die Erfindung betrifft eine Kurbel für eine Welle, bestehend aus einem äußeren Spannkörperteil und einem inneren Spannkörperteil, wobei die Spannkörperteile gegeneinander verdrehbar ausgebildet sind, wobei in wenigstens einem der Spannkörperteile wenigstens ein Blockierelement für die Festlegung der Verdrehbewegung der Spannkörperteile beziehungsweise der Kurbel vorgesehen ist.

Derartige Kurbeln werden beispielsweise auf Wellen aufgesetzt, um mit dieser eine Spanneinrichtung oder dergleichen anzutreiben. Beispielsweise werden derartige Kurbeln auch in Geräten für die Landwirtschaft, wie beispielsweise einem Klauenpflegestand oder einem Pferdebeschlagsstand eingesetzt, um bestimmte Körperteile der Nutztiere für die Klauenbeschneidung beziehungsweise für das Beschlagen der Pferde zu fixieren. Die Körperteile werden dabei in eine entsprechende Spannvorrichtung des Pflegestandes beziehungsweise des Beschlagsstandes eingespannt. Durch die Welle wird dann der jeweilige Fuß durch Anheben und Fixieren des Beines in einer bestimmte Winkelstellung in die Lage gebracht, in der eine Bearbeitung problemlos möglich ist.

Der Antrieb der Welle oder der Wellen dieser Pflegestände erfolgt über eine Kurbel, die die Welle jeweils antreibt, um die Fixiereinrichtung für das Bein in die gewünschte Stellung zu bringen und dort zu halten.

Beim Stand der Technik tritt nun das Problem auf, daß die Kurbeln zwar die Welle beziehungsweise die Spanneinrichtung des Pflegestandes in die gewünschte Position zu bringen vermögen. Sie blockieren allerdings nur in einer einzigen Richtung. Durch Bewegungen, die das Nutztier zwangsläufig aufgrund der Streßsituation in dem Pflegestand ausübt, lockert sich die Kurbel nach dem Stand der Technik, da sie nur in eine einzige Richtung festlegbar ist. Das bedeutet, daß der Pfleger, der die Pflege an dem Nutztier vornimmt oder der das Pferd beispielsweise beschlägt, während der Arbeiten diese unterbrechen muß, um die Kurbel jeweils wieder nachzuspannen.

Aus dem Stand der Technik ist eine Handkurbel bekannt, bei der der Kurbelarm mit der anzutreibenden Welle in verschiedenen Stellungen mittels eines Riegelgliedes gekoppelt werden kann.

Aus dem Stand der Technik ist des Weiteren eine Vorrichtung zum Hochziehen und Festsetzen von Tierfüßen bekannt, die bei der Klauenbehandlung in sogenannten Pflegeständen eingesetzt wird, wobei diese Vorrichtung aus einer in mindestens einem der Rahmenrohre drehbar gelagerten Windenwelle mit Seilscheibe sowie Handhebel und einer ständig eingerasteten, in einer Drehrichtung wirkenden Klinkensperre gekennzeichnet ist.

Des Weiteren ist ein Umschlingungsgeber bekannt, der aus einem Gehäuse und einer in diesem Gehäuse drehbaren Scheibe, Walze oder dergleichen besteht. Derartige Umschlingungsgeber werden an Maschinen der verschiedensten Art verwendet, wo Schaltwege oder Hubbewegungen über Fernbetätigung von Hand ausgeführt werden. Die Lösung des Umschlingungsgebers lässt sich allerdings nicht als Spanneinrichtung in einem Pflegestand beziehungsweise zur Bedienung einer Spanneinrichtung des Pflegestandes verwenden.

Die EP 0 751 032 A1 zeigt eine Verstellvorrichtung zur besonders feinteiligen Verstellung eines Kraftfahrzeugsitzes mit einer Rastvorrichtung.

Die US 1,572,635 betrifft einen Fensteröffner, der eine Kurbel für eine Welle umfasst. Eine besonders robuste Ausführung der Blockiervorrichtung wird hier nicht gezeigt.

Ausgehend von diesem Stand der Technik ist es Aufgabe der Erfindung, die aus dem Stand der Technik bekannten Nachteile zu beseitigen.

Die Erfindung geht von dem vorher beschriebenen Stand der Technik aus und schlägt zur Lösung der Aufgabe eine Kurbel für eine Welle vor, bestehend aus einem äußeren Spannkörperteil und einem inneren Spannkörperteil, wobei die Spannkörperteile gegeneinander verdrehbar ausgebildet sind, wobei in wenigstens einem der Spannkörperteile wenigstens ein Blockierelement für die Festlegung der Verdrehbewegung der Spannkörperteile beziehungsweise der Kurbel vorgesehen ist und wobei das Blockierelement formschlüssig in wenigstens eines der Spannkörperteile für eine Blockierung der Drehbewegung einzugreifen vermag, und die Kurbel sich dadurch auszeichnet, dass das Blockierelement in dem inneren Spannkörperteil beweglich gelagert ist und zur Blockierung in korrespondierend zur Form des Blockierelements ausgebildete Ausnehmungen im äußeren Spannkörperteil eingreift. Durch die formschlüssige Ausbildung der Blockiereinrichtung ist es möglich, eine komplette Blockierung, nämlich in beide Richtungen, vorzusehen, wodurch eine Lockerung des einmal gespannten Körperteils durch eine Bewegung des Nutztieres nicht mehr ungewollt auftreten kann.

Die Ausnehmungen im äußeren Spannkörperteil sind mit einer Rasterung gleich neun vorgesehen, sodass sich daraus ein Winkel von 40° für die Rasterung an dem äußeren Spannkörperteil ergibt. Des Weiteren sind die Ausnehmungen rund als Halbkreis ausgebildet. Die Erfindung schlägt des Weiteren vor, dass zwei Blockiereinrichtungen im inneren Spannkörperteil winklig zueinander angeordnet sind. Der Winkel zwischen den Blockiereinrichtungen ist dabei so gewählt, dass die Spannelemente die Ausnehmung für ein Blockierung einzugreifen vermögen.

Die Lösungen des Standes der Technik arbeiteten mit kraftschlüssigen Blockierelementen, die die oben beschriebenen Nachteile aufweisen, daß sie nur in eine Richtung blockieren können. Demgegenüber ist es jetzt durch die formschlüssige Ausbildung des Blockierelementes möglich, in beide Richtungen sicher zu blockieren und damit die einmal eingestellte Spannung beziehungsweise Stellung sicher einzuhalten. Der Vorteil durch die erfindungsgemäße Kurbel ist wesentlich, da die Bedienperson sich jetzt ausschließlich auf die Pflegemaßnahme beziehungsweise auf den Beschlagsvorgang beispielsweise konzentrieren kann und nicht ständig prüfen muß, ob noch eine ausreichende Spannung vorhanden ist, um das Bein sicher in der Bearbeitungsstellung zu halten. Die mögliche Unfallgefährdung wird ebenfalls komplett beseitigt.

Die Kurbel nach der Erfindung läßt sich selbstverständlich auch an anderen Wellen einsetzen, die beispielsweise für ähnliche Aufgaben vorgesehen sind. Die Erfindung ist demnach nicht auf eine Welle an einem Pflegestand für ein Nutztier eingeschränkt, sondern vielmehr auch an anderen Spannelementen, die eine Welle aufweisen, durchaus einsetzbar. Beispielsweise ist sie auch an Rahmen einsetzbar, an denen beispielsweise eine Winde befestigt ist, um die Winde über die Welle dieser Winde und die Kurbel nach der Erfindung anzutreiben.

Durch die geschickte Anordnung des Blockierelements im inneren des Spannkörperteiles ist dieses sozusagen nicht sichtbar, ist allerdings beweglich, beispielsweise in einer Führungsnut, gelagert und kann durch diese Lagerung selbstverständlich auch entsprechend ausgebildet werden, um ein automatisches Eingreifen in die Ausnehmungen des äußeren Spannkörperteiles zu ermöglichen.

Entgegen allen bekannten Lösungen des Standes der Technik unterscheidet sich danach die Erfindung insbesondere dadurch, dass die Drehrichtung in beide Richtungen blockierbar und ohne Schwierigkeiten wieder freizugeben ist. Diese Probleme lösen die Lösungen des Stand der Technik nicht. Auch die bekannten Umschlingungsgeber sind letztlich nicht dazu geeignet, die Aufgabe für die Erfindung zu lösen, weil diese Lösung eine zwischen der Scheibe beziehungsweise Walze und dem Gehäuse wirkende Rastvorrichtung vorsieht, die die Rastung entweder am Umfang der Scheibe vorsieht, oder aber auf den jeweiligen Spannbändern eine Öffnung vorhanden sein muss, in die die Raste einzugreifen vermag. Dies ist sehr aufwendig in der Herstellung und erfordert des Weiteren, dass die Rastung immer nur an bestimmte Rastermaße gebunden ist. Dies ist bei dem Einsatz in Tierpflegeständen selbstverständlich nicht sinnvoll, da man dort unterschiedlichste Einstellungen vornehmen muss, die sich beispielsweise nach der Größe der jeweiligen festzulegenden Gliedmaßen richten usw. Demnach kann die Aufgabe der Erfindung durch den Umschlingungsgeber nach dem Stand der Technik nicht gelöst werden. Löst man die Rastvorrichtung, dann entspannt sich der gespannte Gegenstand sehr schnell, sodass man diese Vorrichtung schon aus Sicherheitsgründen nicht bei Pflegeständen der in Rede stehenden Art für die Erfindung einsetzen kann.

Auch die aus dem Stand der Technik bekannte Handkurbel, bei der der Kugelarm mit der anzutreibenden Welle in verschiedenen Stellungen mittels eines Riegelgliedes gekuppelt werden kann, ist letztlich für die Lösung der gestellten Aufgabe nicht geeignet, da man mittels eines Handhebels das Rastelement jeweils betätigen muss, um beispielsweise die Winde weiter zu spannen beziehungsweise zu lösen. Dabei müssen ebenfalls wieder sehr ungünstig gestaltete Rastermaße eingehalten werden. Löst man beispielsweise mittels des Hebels die Verbindung, wird die Winde zurückschnellen und da in einem Tierpflegestand die Tiere, wie weiter vorn beschrieben, in der Regel durch den mit der Behandlung verbundenen Streß nicht bewegungsfrei sind, wird die Spannung möglicherweise komplett gelöst. Auch diesen Nachteil vermeidet die Erfindung durch die geschickte Anordnung des Blockierelementes im Inneren des Spannkörpers und die bewegliche Anordnung in einer Führungsnut, um ein automatisches Eingreifen in die Ausnehmungen des äußeren Spannkörperteiles zu ermöglichen. Bei der erfindungsgemäßen Kurbel sind demnach beide Bewegungsrichtungen durch ein automatisches Eingreifen in die Ausnehmungen des äußeren Spannkörperteiles blockier- und wieder lösbar, was bei allen Lösungen des Standes der Technik nicht der Fall ist.

Demnach zeichnet sich eine weitere Variante der erfindungsgemäßen Kurbel dadurch aus, daß das Blockierelement als in einer Nut geführtes und mit einer Feder federgelagertes Formteil ausgebildet ist, welches im inneren Spannkörperteil vorgesehen ist. Selbstverständlich kann auch hier die umgekehrte Kinematik angewendet werden, indem das Blockierelement beispielsweise in dem äußeren Spannkörperteil angeordnet wird und die Ausnehmungen beziehungsweise die für die Blockierung notwendigen korrespondierendem Blockierungsgegenstücke können dann an dem inneren Spannkörperteil vorgesehen werden. Die Erfindung ist nicht auf eine Ausführungsform eingeschränkt, bei der das beziehungsweise die Blockierelemente in dem inneren Spannkörperteil vorgesehen ist/sind.

Durch die Führung in einer Nut ist es geschickt möglich, die Feder auch in dieser Nut vorzusehen. Damit ist der Platzbedarf bezüglich der Höhe der Kurbel relativ gering. Alle Teile des Blockierelementes sind problemlos in dem inneren Spannkörperteil beziehungsweise im Inneren der Kurbel beziehungsweise des Kurbelgehäuses angeordnet.

Um eine problemlose Funktion zu gewährleisten ist es möglich, das äußere Spannkörperteil bezüglich der Drehbewegung festzulegen. Dies kann beispielsweise durch eine Öse an dem äußeren Spannkörperteil realisiert werden, die dann an einem Pflegestand für eine Befestigung beziehungsweise Festlegung dieses äußeren Spannkörperteiles dient. Durch die Öse kann ein Blokkierhaken oder -bolzen oder eine Schraube für die Fixierung geführt werden.

Erfindungsgemäß ist es weiterhin vorgesehen, daß zwei Blockiereinrichtungen vorgesehen sind, die in entgegengesetzer Richtung wirken. Durch diese geschickte Anordnung von zwei Blockiereinrichtungen mit entgegengesetzter Wirkrichtung ist es noch günstiger möglich zum einen eine problemlose Bedienung der Kurbel zu gewährleisten und zum anderen die Blockierung in beide Richtungen zu ermöglichen.

Die Kurbel zeichnet sich in einer weiteren Variante der Erfindung dadurch aus, daß die Blockiereinrichtung beziehungsweise die Blockiereinrichtungen plattenförmig ausgebildet ist (sind), wobei die Feder die Platte gegen das äußere Spannkörperteil drückt. Dadurch vermag die Blockiereinrichtung immer dann in das äußere Spannkörperteil einzugreifen, wenn sich die Blokkiereinrichtung korrespondierend zu einer entsprechenden Ausnehmung im äußeren Spannkörperteil befindet. Die Blockierung der Drehbewegung ist außerdem ebenfalls in beide Richtungen möglich. Dies wird zum einen durch den Formschluß gewährleistet und zum anderen durch das Vorsehen von wenigstens zwei Blokkiereinrichtungen in der Kurbel.

Die Kurbel nach der Erfindung zeichnet sich auch dadurch aus, daß ein Spannhebel vorgesehen ist, der gleichzeitig auf einer Seite als Deckel beziehungsweise Verschluß für die Kurbel ausgebildet ist. Erfindungsgemäß ist an dem Deckel für die Kurbel ein Zapfen vorgesehen, der so angeordnet ist, daß er in eine am äußeren Radius des inneren Spannkörperteils vorgesehene Führungsnut eingreift. Der Zapfen ist demnach gegen das Innere des Kurbelgehäuses gerichtet.

Erfindungsgemäß wurde auch gefunden, daß es von Vorteil ist, wenn an der plattenförmig ausgebildeten Blockiereinrichtung eine Abschrägung vorgesehen ist, an der der Zapfen bei einer Bewegung des Deckels angreift, um die Blockiereinrichtung gegen die Kraft der Feder nach innen zu drücken und die Blockierstellung freizugeben. Die Abschrägung ist in einem Winkel von 35° bis 50°, bevorzugt 45° vorgesehen.

Die Erfindung zeichnet sich in einer geschickten Variante auch dadurch aus, daß an dem inneren Spannkörperteil ein Ansatz ausgebildet ist, der die Führung für den Deckel bildet, wobei der Deckel mittels eines Befestigungselementes, zum Beispiel eines Federringes, in einer Ringnut fixierbar ist. An dem Spannhebel ist gemäß einer Weiterbildung der Erfindung ein Handgriff vorgesehen, der insbesondere drehbar gelagert ist. Der Handgriff ist zudem vorteilhafterweise rechtwinklig bezüglich des Spannhebels angeordnet.

Eine Weiterbildung der Erfindung schlägt auch vor, daß zwei Blockiereinrichtungen in dem inneren Spannkörperteil winklig zueinander angeordnet sind. Der Winkel zwischen den Blockiereinrichtungen beträgt dabei bevorzugt 40°, wobei der Winkel insbesondere so gewählt ist, daß eine Bohrung des inneren Spannelementes tangiert wird und die Spannelemente in die Ausnehmung für eine Blockierung einzugreifen vermögen. Die Erfindung sieht weiterhin vor, daß in der Bohrung ein Vierkant ausgebildet ist, der der Befestigung der Kurbel zum Beispiel auf einer Welle des Pflegestandes dient.

Die Ausnehmungen im äußeren Spannkörperteil sind bevorzugt mit einer Rasterung gleich Neun vorgesehen, so daß sich daraus ein Winkel von 40° für die Rasterung an dem äußeren Spannkörperteil ergibt.

Die Erfindung betrifft auch einen Pflegestand zur Pflege von Nutztieren, insbesondere zur Pflege von Rindern oder Pferden, wobei wenigstens eines der Körperteile der Nutztiere, zum Beispiel das Bein eines Rindes oder Pferdes, zur Pflege in dem Pflegestand festgelegt wird, mit einer Kurbel nach einem oder mehreren der vorher beschriebenen Ausführungsformen beziehungsweise Varianten der Erfindung. Die Vorteile durch die Kurbel werden an dem Pflegestand selbstverständlich ebenfalls erzielt.

Ein Pflegestand wie zuvor beschrieben zeichnet sich entsprechend einer Weiterbildung dadurch aus, daß die Kurbel auch als Antrieb zum Einspannen beziehungsweise Festziehen über die Einspannelemente des Pflegestandes wenigstens eines der Körperteile des Nutztieres dient.

Ein weiterer Aspekt des Pflegestandes nach der Erfindung ist dadurch angegeben, daß die Kurbel wenigstens eine Winde für das Festlegen von Körperteilen der Nutztiere antreibt.

Die Erfindung zeichnet sich auch dadurch aus, daß die Kurbel umsetzbar ausgebildet ist, um an unterschiedlichen Wellen, Winden oder dergleichen einsetzbar zu sein.

Die Erfindung wird nachfolgend anhand von Ausführungsbeispielen weiter beschrieben. Es zeigen:
- Fig. 1a und 1b: eine Ausführungsform der Kurbel nach der Erfindung,
- Fig. 2a und 2b: Details nach Fig. 1,
- Fig. 3a und 3b: Gesamtansicht einer komplett montierten Kurbel nach der Erfindung.

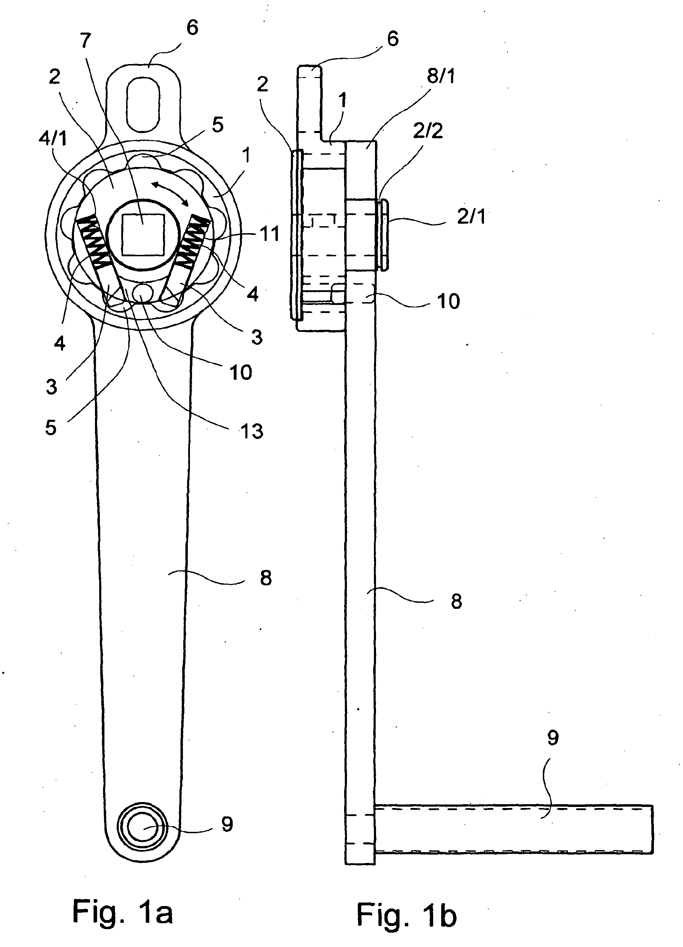

Die Fig. 1a und 1b zeigen eine bevorzugte Ausführungsform der Kurbel nach der Erfindung, wobei die Fig. 1a eine Draufsicht auf die Kurbel zeigt und die Fig. 1b eine Seitenansicht. Die Fig. 1a ist dabei so dargestellt, daß das Innere des Kurbelgehäuses erkennbar ist. Dieses wäre normalerweise durch den Spannhebel 8 mit seinem als Deckel 8/1 ausgebildeten oberen Teil nicht sichtbar. Um aber die Funktionsweise der Kurbel nach der Erfindung sichtbar zu machen, wurde eine solche Darstellung gewählt. Die Beschreibung aller Figuren 1 bis 3 wird dabei insgesamt im Zusammenhang vorgenommen, da in allen drei Figuren die gleiche Ausführungsform, jedoch in unterschiedlichen Darstellungsvarianten beschrieben wird. Die Erfindung ist allerdings nicht auf diese vorteilhafte Ausführungsform eingeschränkt. Vielmehr dient sie lediglich dem besseren Verständnis der Erfindung.

Die Kurbel ist demnach auf einer nicht gezeigten Welle aufsetzbar. Dies erfolgt in der Regel durch eine verbindung in einer Bohrung 7, die hier beispielsweise als Vierkant ausgebildet ist. Dort wird die erfindungsgemäße Kurbel auf eine entsprechende Welle mit dem jeweiligen dazu passenden Vierkant aufgesetzt. Selbstverständlich ist auch eine Nut-Federverbindung auf der Welle möglich. Die Welle und der Pflegestand sind nicht dargestellt. Dies ist zum Verständnis der Erfindung nicht unbedingt notwendig und deshalb nicht gezeigt.

Die erfindungsgemäße Kurbel besteht aus einem äußeren Spannkörperteil 1 und einem inneren Spannkörperteil 2. Der innere Spannkörperteil 2 hat zwei Nuten 11, in die Blockiereinrichtungen 3 eingesetzt sind. Die Blockiereinrichtungen 3 werden dabei von Federn 4 gegen das äußere Spannkörperteil 1 gedrückt. Dort greifen die Blockiereinrichtungen 3 in vorhandene Ausnehmungen 5 ein.

Die Ausnehmungen 5 sind dabei in einer solchen Rasterung vorgesehen, daß ein Einrasten in jeweils 40° Abstand möglich ist. Vorteilhafterweise sind dabei auch die Blockierelemente 3 in diesem Winkel angeordnet, so daß auch diese jeweils in eine korrespondierend dazu angeordnete Ausnehmung 5 als Rastelement einzugreifen vermögen. Die Ausnehmungen sind bevorzugt, wie dargestellt, rund als Halbkreis ausgebildet.

Die Federn 4 sind in einer Sackbohrung 4/1 im inneren Spannkörperteil 2 fixiert und werden weiterhin in dem Blockierelement 3 in den dort vorhandenen, nicht gezeigten Einkerbungen geführt. Dies ist allerdings nicht unbedingt erforderlich, da aufgrund der Führung in der Sackbohrung 4/1 die Feder 4 ausreichend gesichert und geführt ist.

An dem äußeren Spannkörperteil 1 ist eine Öse 6 vorgesehen, die zum Festlegen der Kurbel an einem Rahmen, beispielsweise eines Pflegestandes zur Pflege von Nutztieren möglich ist. Durch den Doppelpfeil auf dem inneren Spannkörperteil 2 wird angedeutet, daß dieses in beide Richtungen bewegbar ist. Der Spannhebel 8 dient, wie bereits erwähnt, gleichzeitig dem Verschluß des Gehäuses der Kurbel und zur Betätigung beziehungsweise Bewegung der Welle.

Dabei ist an dem Deckel 8/1 ein Zapfen 10 vorgesehen, der nach innen in das Kurbelgehäuse hineinragt und dort in eine am äußeren Radius des inneren Spannkörperteils 2 vorgesehene Führungsnut 13 eingreift. Im weiteren ist der Zapfen 10 so ausgebildet und angeordnet, daß er an den Schrägen 3/1 des Blockierelementes 3 anzugreifen vermag und durch eine Drehbewegung bewirkt, daß das jeweilige Blockierelement 3 dann soweit zurückgeschoben wird, daß die blockierte Richtung dadurch freigegeben wird.

Mit der Drehbewegung des inneren Spannkörperteiles 2 folgt dann auch das zweite Blockierelement 3 dieser Richtung. Durch die Abschrägung wird geschickterweise erreicht, daß sich die Abschrägung dann an der Ausnehmung 5 ebenfalls derart abstützt, daß auch dieses Blockierelement 3 dann nach innen gedrückt wird, so daß eine Bewegung in die eine Richtung ermöglicht ist. Dann greift dieses Blockierelement 3 in die nächste Rasterung der Ausnehmung 5 ein, so daß eine Rückwärtsbewegung dann nicht mehr möglich ist, wodurch die eine Bewegungsrichtung blockiert wird.

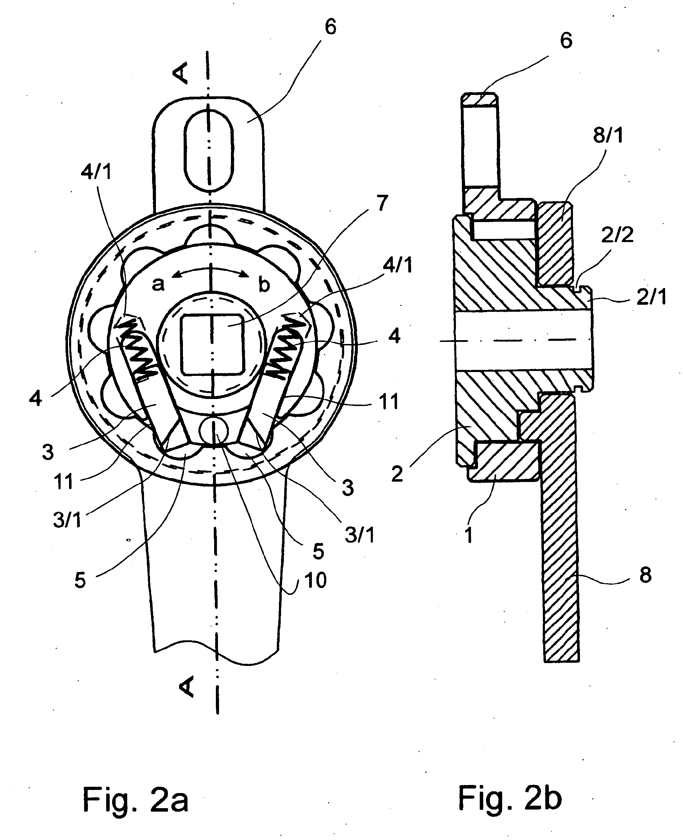

In der gezeigten Stellung der Fig. 1a befindet sich der Zapfen 10 in einer Mittelstellung, so daß beide Blockiereinrichtungen 3 in Ausnehmungen 5 eingreifen und damit die Kurbel in beide Richtungen blockiert. Wird nun der Spannhebel 8 nach rechts beispielsweise gedreht, greift er an der Schräge 3/1 des rechten Blockierelementes 3 an und drückt dieses nach innen. Dadurch wird die Bewegungsrichtung nach rechts beziehungsweise a (siehe Fig. 2a) freigegeben. Das linke Blockierelement wird wieder durch die Form der Ausnehmung 5 an der Schräge 3/1 ebenfalls nach innen gedrückt, so daß auch eine Bewegung in Richtung a weiter möglich ist, solange der Zapfen 10 an dem rechten Blockierelement angreift.

An dem Spannhebel 8 ist ein Handgriff 9 vorgesehen, der ebenfalls drehbar gelagert ist. Dies ist allerdings ebenfalls nicht unbedingt erforderlich, sondern lediglich in der gezeigten Ausführungsform als vorteilhafte Variante beschrieben. Der Spannhebel 8 mit seinem Deckel 8/1 ist über das innere Spannkörperteil 2 legbar und wird in einem Ansatz 2/1 geführt. An dem Ansatz 2/1 ist eine Ringnut 2/2 vorgesehen, in die beispielsweise ein Federring einlegbar ist, um den Spannhebel 8 mit seinem Deckel 8/1 an dem Spannkörperteil 2 zu befestigen.

Die Fig. 2a und 2b zeigen eine vergrößerte Ausschnittsdarstellung aus Fig. 1a beziehungsweise 1b und bestimmte Bezugszeichen sind hier deutlicher erkennbar, als in Fig. 1a und 1b.

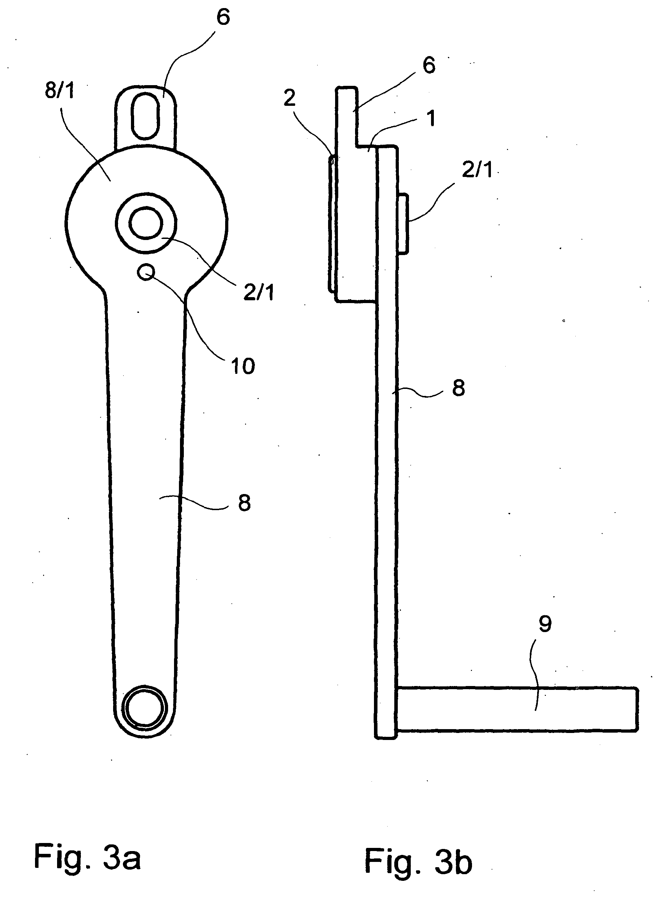

Die Fig. 3a beziehungsweise 3b stellt lediglich eine Montageansicht dar, die die erfindungsgemäße Kurbel in ihrem zusammengebauten Zustand in einer Vorder- beziehungsweise Seitenansicht zeigen.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

## Patentansprüche

1. Kurbel für eine Welle, bestehend aus einem äußeren Spannkörperteil (1) und einem inneren Spannkörperteil (2), wobei die Spannkörperteile (1, 2) gegeneinander verdrehbar ausgebildet sind, wobei in wenigstens einem der Spannkörperteile (1,2) wenigstens ein Blockierelement (3) für die Festlegung der Verdrehbewegung der Spannhörperteile beziehungsweise der Kurbel vorgesehen ist, wobei das Blockierelement (3) formschlüssig in wenigstens eines der Spannkörperteile (1, 2) für eine Blockierung der Drehbewegung einzugreifen vermag, wobei das Blockierelement (3) in dem inneren Spannkörperteil (2) beweglich gelagert ist und zur Blockierung in korrespondierend zur Form des Blockierelements ausgebildete Ausnehmungen (5) im äußeren Spannkörperteil (1) eingeift, **dadurch gekennzeichnet, dass** die Ausnehmungen (5) rund als Halbkreis mit einer Rasterung gleich neun in einem Winkel von 40 Grad an dem äußeren Spannkörperteil (1) vorgesehen sind und zwei Blockierelemente (3) im inneren Spannkörperteil (2) winklig zueinander angeordnet sind und der Winkel so gewählt ist, dass die Blockierelemente (3) in die Ausnehmungen (5) für eine Blockierung einzugreifen vermögen.

2. Kurbel nach Anspruch 1, **dadurch gekennzeichnet, dass** das Blockierelement (3) als in einer Nut (11) geführtes und mit einer Feder (4) federgelagertes Formteil ausgebildet im inneren Spannkörperteil (2) vorgesehen ist und/oder das äußere Spannkörperteil, (1) bezüglich der Drehbewegung festlegbar ist.

3. Kurbel nach einem der vorhergehenden Ansprüche, **dadurch gekennzeichnet, dass** eine Öse (6) an dem äußeren Spannkörperteil (1) vorgesehen ist, die an einem Pflegestand für eine Befestigung bzw. Festlegung des äußeren Spannkörperteils (1) dient und/oder zwei Blockiereinrichtungen (3) vorgesehen sind, die in entgegengesetzter Richtung wirken.

4. Kurbel nach einem der vorhergehenden Ansprüche, **dadurch gekennzeichnet, dass** die Blockiereinrichtung (3) plattenförmig ausgebildet ist, wobei die Feder (4) die Platte gegen das äußere Spannkörperteil (1) drückt.

5. Kurbel nach einem der vorhergehenden Ansprüche, **dadurch gekennzeichnet, dass** die Kurbel einen Spannhebel (8) aufweist, der gleichseitig auf einer Seite als Deckel (8/1) bzw. Verschluß für die Kurbel ausgebildet ist und/oder an dem Deckel (8/1) ein Zapfen (10) vorgesehen ist, der so angeordnet ist, dass er in eine am äußeren Radius des inneren Spannkörperteils (2) vorgesehenen Führungsnut (13) eingreift.

6. Kurbel nach einem der vorhergehenden Ansprüche, **dadurch gekennzeichnet, dass** an der plattenförmig ausgebildeten Blockiereinrichtung (3) eine Abschrägung (3/1) vorgesehen ist, an der der Zapfen (10) bei einer Bewegung des Deckels (8/1) angreift, um die Blockiereinrichtung (3) gegen die Kraft der Feder (4) nach innen zu drücken und die Blockierstellung freizugeben.

7. Kurbel nach einem der vorhergehenden Ansprüche, **dadurch gekennzeichnet, dass** an dem inneren Spannkörperteil (2) ein Ansatz (2/1) ausgebildet ist, der die Führung für den Deckel (8/1) bildet, wobei der Deckel (8/1) mittels eines Befestigungselementes, z.B. eines Federringes, in einer Ringnut (2/2) fixierbar ist.

8. Kurbel nach einem der vorhergehenden Ansprüche, **dadurch gekennzeichnet, dass** an dem Spannhebel (8) ein Handgriff (9) insbesondere drehbar angeordnet ist.

9. Kurbel nach einem der vorhergehenden Ansprüche, **dadurch gekennzeichnet, dass** der Winkel zwischen den Blockierelementen (3) 40 Grad beträgt, wobei der Winkel bevorzugt so gewählt ist, dass eine Bohrung (7) des inneren Spannelementes (2) tangiert wird.

10. Kurbel nach einem der vorhergehenden Ansprüche, **dadurch gekennzeichnet, dass** die Bohrung (7) einen Vierkant aufweist, der der Befestigung der Kurbel, zum Beispiel auf einer welle des Pflegegtandes, dient.

11. Pflegestand zur Plege von Nutztieren, insbesondere zur Pflege von Rindern oder Pferden, wobei wenigstens eines der Körperteile der Nutztiere, zum Beispiel das Bein eines Rindes oder Pferdes, zur Pflege in dem Pflegestand festgelegt wird, mit einer Kurbel nach einem der vorhergehenden Ansprüche.

12. Pflegestand zur Pflege von Nutztieren nach Anspruch 11, **dadurch gekennzeichnet, dass** die Kurbel auch zum Einspannen bzw. Festziehen auf wenigstens eines der Einspannelemente des Pflegestandes aufsetzbar ist bzw. an diesem befestigbar ist, um wenigstens eines der Körperteile des Nutztieres festzulegen.

13. Pflegestand nach einem der vorhergehenden Ansprüche 11 und 12, **dadurch gekennzeichnet, dass** die Kurbel wenigstens eine Winde für das Festlegen von Körperteilen der Nutztiere antreibt und/oder die Kurbel umsetzbar ist, um an unterschiedlichen Winden einsetzbar zu sein.

## Claims

1. Crank for a shaft comprising an outer clamping body part (1) and an inner clamping body part (2), wherein the clamping body parts (1, 2) are configured in such a way that they can be twisted against each other, wherein in at least one of the clamping body parts (1, 2) at least one locking element (3) is provided for defining the twisting movement of the clamping body parts and the crank, respectively, wherein the locking element (3) can engage positive interlocking in at least one of the clamping body parts (1, 2) for locking the twisting movement, wherein the locking element (3) is supported movably on bearings in the inner clamping body part (2), and engages for locking in recesses (5) in the outer clamping body part (1) configured correspondingly with the shape of the locking elements, **characterized in that** the recesses (5) are provided circularly as semicircle with a screening equaling nine in an angle of 40 degrees at the outer clamping body part (1), and two locking elements (3) are arranged in the inner clamping body part (2) angled towards each other, and the angle is chosen in such a way that the locking elements (3) can engage in the recesses (5) for locking.

2. Crank according to claim 1, **characterized in that** the locking element (3) is provided configured as a molded part guided in a groove (11) and spring mounted with a tongue (4), and/or the outer clamping body part (1) can be defined with respect to the rotational movement.

3. Crank according to one of the preceding claims, **characterized in that** an eyelet (6) is provided at the outer clamping body part (1) serving for fastening or defining the outer clamping body part (1) at a grooming booth, and/or two locking devices (3) are provided acting in opposite direction.

4. Crank according to one of the preceding claims, **characterized in that** the locking device (3) is designed slab-like, wherein the spring (4) presses the slab against the outer clamping body part (1).

5. Crank according to one of the preceding claims, **characterized in that** the crank has a clamping lever (8) that is configured simultaneously on one side as lid (8/1) or closure for the crank, and/or at the lid (8/1) a peg (10) is provided arranged in such a way that it engages in a guiding groove (13) provided at the outer radius of the inner clamping body part (2).

6. Crank according to one of the preceding claims, **characterized in that** at the slab-like locking device (3) a chamfer (3/1) is provided at which the peg (10) engages when the lid (8/1) moves, to press the locking device (3) inwards against the power of the spring (4), and to release the locking position.

7. Crank according to one of the preceding claims, **characterized in that** at the inner clamping body part (2) a base (2/1) is formed that forms the guide for the lid (8/1), wherein the lid (8/1) can be fixed by means of a fastening element, for example a spring washer, in a ring groove (2/2).

8. Crank according to one of the preceding claims, **characterized in that** at the clamping lever (8) a handle (9) is arranged, in particular rotatable.

9. Crank according to one of the preceding claims, **characterized in that** the angle between the locking elements (3) is 40 degrees, wherein the angle is chosen preferably in such a way that a boring (7) of the inner clamping element (2) is touched.

10. Crank according to one of the preceding claims, **characterized in that** the boring (7) has a square serving for fastening the crank, for example on a shaft of the grooming booth.

11. Grooming booth for grooming livestock, in particular for grooming cows or horses, wherein at least one of the body parts of the livestock, for example the leg of a cow or horse, is defined in the grooming booth for grooming, with a crank according to one of the preceding claims.

12. Grooming booth for grooming livestock according to claim 11, **characterized in that** the crank can be put on or be fastened to at least one of the clamping elements of the grooming booth also for clamping or tightening, in order to define at least one of the body parts of the livestock.

13. Grooming booth according to one of the preceding claims 11 and 12, **characterized in that** the crank drives at least one winch for defining body parts of the livestock, and/or the crank can be moved to be used at different winches.

## Revendications

1. Manivelle pour un arbreá d'entrannement consistant en un bloc de serrage extérieur (1) et un bloc de serrage intérieur (2) dont un bloc peut pivoter par rapport à l'autre et dont au moins un bloc (1, 2) contient au moins un élément de blocage (3) s'introduisant dans au moins un des blocs de serrage (1, 2) et empêchant pas sa forme parfaitement adaptée un quelconque mouvement de rotation des blocs de serrage (1, 2) ou de la manivelle, l'élément de blocage (3) étant situé de fagon mobile à l'intérieur du bloc de serrage intérieur (2) lui permettant de s'introduire dans des évidements (5) ayant une forme adaptée à celle de l'élément de blocage (3) et situés dans le bloc de serrage extérieur (1), **caractérisée en ce que** les évidements (5) sont arrondis formant un demi-cercle et placés en cercle neuf fois de fagon équidistante sous un angle de 40 degrés par rapport au centre au niveau du bloc de serrage extérieur (1) et **en ce que** deux éléments de blocage (3) sont situés à l'intérieur du bloc de serrage intérieur (2) en formant un angle aigu entre eux de sorte qu'ils peuvent s'introduire dans des évidements (5) afin d'immobiliser l'ensemble.

2. Manivelle selon la revendication 1, **caractérisée en ce que** l'élément de blocage (3) est une pièce préformée, guidée dans une gorge (11) et maintenue par un ressort (4) à l'intérieur du bloc de serrage intérieur (2) et/ou en ce que le bloc de serrage extérieur (1) peut être immobilisé par rapport au mouvement de rotation de l'ensemble.

3. Manivelle selon une des revendications précédentes, **caractérisée en ce que** le bloc de serrage extérieur (1) possède un illet (6) permettant de l'immobiliser ou de le fixer à un travail et/ou **en ce que** deux éléments de blocage (3) existent et agissent en sens opposé.

4. Manivelle selon une des revendications précédentes, **caractérisée en ce que** les éléments de blocage (3) possèdent des formes plates permettant au ressort (4) de pousser l'élément plat contre le bloc de serrage extérieur (1).

5. Manivelle selon une des revendications précédentes, **caractérisée en ce que** la manivelle possède un levier de serrage (8) fonctionnant également comme cache (8/1) ou bouchon de la manivelle et/ou **en ce qu'**une tige (10) est prévue au niveau du cache (8/1) et située à l'intérieur d'une gorge de guidage (13) au niveau du rayon extérieur du bloc de serrage intérieur (2).

6. Manivelle selon une des revendications précédentes, **caractérisée en ce que** l'élément de blocage à extrémité plate (3) possède un plan incliné (3/1) interagissant avec la tige (10) lors d'un mouvement du cache (8/1) en poussant l'élément de blocage (3) vers l'intérieur contre la force du ressort (4) afin d'ainsi débloquer l'ensemble.

7. Manivelle selon une des revendications précédentes, **caractérisée en ce qu'**un élément extérieur (2/1) prolonge le bloc de serrage intérieur (2) et forme un guidage pour le cache (8/1), qui est maintenu en place par un moyen de fixation tel une rondelle-ressort située dans une gorge (2/2) dans la circonférence extérieure de cet prolongement.

8. Manivelle selon une des revendications précédentes, **caractérisée en ce que** le levier de serrage (8) possède une poignée mobile (9).

9. Manivelle selon une des revendications précédentes, **caractérisée en ce que** les éléments de blocage (3) forment entre eux un angle de 40 degrés et sont orientés de préférence en suivant la tangente du pergage (7) du bloc de serrage intérieur (2).

10. Manivelle selon une des revendications précédentes, **caractérisée en ce que** le pergage (7) possède une forme adaptée à la fixation sur un carré pouvant être celui d'un arbre d'entrannement d'un travail.

11. Travail facilitant les soins du bétail et en particulier des bovins et des chevaux dont au moins une partie du corps, par exemple la patte d'un buf ou d'un cheval est immobilisée dans le travail à l'aide d'une manivelle selon une des revendications précédentes.

12. Travail facilitant les soins du bétail selon la revendication 11, **caractérisé en ce que** la manivelle de serrage ou d'immobilisation peut être utilisée ou fixée à au moins un des éléments de serrage du stand de soin afin d'immobiliser au moins une partie d'un animal de ferme.

13. Travailâ selon une des revendications précédentes 11 ou 12, **caractérisé en ce que** la manivelle entranne au moins un arbre de rotation servant à immobiliser des parties du bétail et/ou **en ce que** la manivelle peut être déplacée afin entranner des arbres de rotation différents.
